# FASCICULE DE BREVET EUROPEEN

(11) **EP 2 695 279 B1**
(45) Date de publication et mention de la délivrance du brevet: **04.05.2022**
(21) Numéro de dépôt: 12718695.5
(22) Date de dépôt: 05.04.2012
(51) Int. Cl.: B60L 1/00, B60L 53/14, B60L 53/22, B60L 50/51, B60L 53/24, B60L 53/65, B60L 53/10, H02J 7/02

(54) **DISPOSITIF DE TRANSFERT DE CHARGE ET PROCÉDÉ DE GESTION ASSOCIÉ**
LADUNGSÜBERTRAGUNGSVORRICHTUNG UND ZUGEHÖRIGES VERWALTUNGSVERFAHREN
CHARGE TRANSFER DEVICE AND ASSOCIATED MANAGEMENT METHOD

(30) Priorité: 08.04.2011 FR 1153093
(43) Date de publication de la demande: 12.02.2014
(73) Titulaire: Valeo Systèmes de Contrôle Moteur, 95800 Cergy (FR)
(72) Inventeur: BOUCHEZ, Boris, F-95800 Cergy (FR); DE SOUSA, Luis, F-95670 Eragny sur Oise (FR)
(74) Mandataire: Novembre, Christophe Adelphe
(86) Numéro de dépôt international: PCT/FR2012/050750
(87) Numéro de publication internationale: WO 2012/143642

(56) Documents cités:
- EP-A1- 2 197 086
- WO-A2-2007/066198
- MADAWALA U K ET AL: "â Living and mobilityâ - a novel multipurpose in-house grid interface with plug in hybrid BlueAngle", SUSTAINABLE ENERGY TECHNOLOGIES, 2008. ICSET 2008. IEEE INTERNATIONAL CONFERENCE ON, IEEE, PISCATAWAY, NJ, USA, 24 novembre 2008 (2008-11-24), pages 531-536, XP031442227, ISBN: 978-1-4244-1887-9
- LUIS DE SOUSA ET AL: "A combined multiphase electric drive and fast battery charger for Electric Vehicles", VEHICLE POWER AND PROPULSION CONFERENCE (VPPC), 2010 IEEE, IEEE, 1 septembre 2010 (2010-09-01), pages 1-6, XP031929193, DOI: 10.1109/VPPC.2010.5729057 ISBN: 978-1-4244-8220-7
- None

## Description

La présente invention concerne le domaine des dispositifs électriques de commande des moteurs électriques des véhicules automobiles et plus particulièrement les transferts de charge au niveau des moyens d'accumulation de ces dispositifs.

Dans l'état de la technique, les moteurs électriques sont alimentés par des moyens d'accumulation, généralement des batteries rechargeables haute tension qui fournissent l'énergie nécessaire au moteur électrique.

Par ailleurs, afin de recharger ces batteries, différents moyens sont envisagés comme par exemple la connexion à des réseaux domestiques de tension alternative monophasé ou triphasé ou des réseaux de tension continue. De plus, un transfert de charge entre deux véhicules afin de recharger les batteries de l'un des véhicules (par exemple en cas de panne pour cause de batterie faible) apparaît aussi comme une possibilité souhaitable pour améliorer le fonctionnement des véhicules électriques et comme une fonction très intéressante pour les utilisateurs.

Néanmoins, avec les dispositifs de l'état de la technique, la réalisation d'un dispositif de charge et de décharge couvrant l'ensemble des possibilités précitées, requiert l'ajout de nombreux composants électriques afin de permettre un transfert de charge entre les différentes configurations de circuits électriques extérieurs au véhicule et les batteries rechargeables du véhicule.

Les demandes EP 2 197 086 et WO 2007/066198 divulguent des dispositifs de transfert de charge comprenant deux onduleurs chacun interposé entre un même bus continu et un moteur électrique couplé en étoile. Aucun de ces documents ne divulgue un onduleur à pont en H relié d'une part au convertisseur de tension et d'autre part aux phases du moteur électrique.

L'article "A combined multiphase electric drive and fast battery charger for Electric Vehicles" par Luis de Sousa et al., publiée dans les actes de la conférence "Vehicle Power and Propulsion Conférence" (VPPC), qui s'est déroulée les 1-3 septembre 2010, divulgue des dispositifs de transfert de charge comprenant un onduleur de tension à ponts en H connecté à un convertisseur de tension d'une part et aux phases d'un moteur électrique d'un véhicule automobile d'autre part, les bobinages des phases du moteur étant chacun accessible indépendamment l'un de l'autre pour être connecté à un circuit électrique extérieur, chacun des bobinages des phases du moteur électrique comprenant un point milieu positionné entre deux demi-bobines du bobinage. La demande de brevet WO 2010/057893 A1 divulgue un dispositif similaire.

J Le but de la présente invention est donc de proposer un procédé et un dispositif permettant d'effectuer des transferts de charge entre un grand nombre de configurations de circuits électriques et les batteries du véhicule en ajoutant un nombre restreint de composants électriques.

Les modes de réalisation de la présente invention ont donc pour objet un procédé selon la revendication indépendante 1 de gestion d'un transfert de charge entre, d'une part des moyens d'accumulation d'un dispositif électrique de commande d'un moteur électrique d'un véhicule automobile et, d'autre part, un circuit électrique extérieur au dit véhicule automobile, ledit dispositif électrique de commande comprenant:
- un convertisseur de tension connecté aux moyens d'accumulation,
- un onduleur de tension à ponts en H connecté au convertisseur de tension d'une part et aux phases du moteur électrique d'autre part, les bobinages des phases dudit moteur étant chacun accessible indépendamment l'un de l'autre pour être connecté au circuit électrique extérieur, chacun des bobinages des phases du moteur électrique comprenant un point milieu positionné entre deux demi-bobines du bobinage pour équilibrer le courant entre les deux demi-bobines; le procédé comprenant également une étape de commande du convertisseur de tension et de l'onduleur de tension en fonction du transfert de charge.

Le procédé comprend en outre, avant la commande du convertisseur et de l'onduleur de tension :
- la connexion du dispositif électrique de commande au circuit électrique extérieur au véhicule,
- la détermination du transfert de charge, notamment à partir d'une détection de la configuration du circuit électrique extérieur auquel le dispositif électrique de commande est connecté.

En outre, les phases du moteur électrique comprennent un bobinage à point milieu, et la connexion du dispositif au circuit électrique extérieur au véhicule comprend la connexion de points milieux des phases à des bornes prédéterminées du circuit électrique extérieur.

En outre, la détection de la configuration du circuit électrique extérieur comprend l'établissement d'une ligne pilote permettant au véhicule d'échanger avec le circuit électrique extérieur des informations concernant la configuration du dit circuit électrique extérieur.

Selon un mode de réalisation additionnel, la ligne pilote permet de déterminer le sens du transfert de charge et la puissance délivrée lors du transfert de charge.

Selon un autre mode de réalisation, la ligne pilote est établie selon le protocole de la norme CEI 61851-1.

Selon un mode de réalisation, la commande comprend l'application d'une stratégie de commande prédéterminée du convertisseur de tension et de l'onduleur de tension en fonction de la configuration du circuit électrique extérieur.

Selon un mode de réalisation supplémentaire, le convertisseur de tension et l'onduleur de tension comprennent des interrupteurs, et la commande du convertisseur de tension et de l'onduleur de tension comprend l'ouverture et la fermeture des interrupteurs desdits convertisseur de tension et onduleur de tension.

Selon un autre mode de réalisation, la borne de terre du circuit électrique extérieur est reliée à un élément de la carrosserie du véhicule automobile.

Selon un mode de réalisation additionnel, le circuit électrique extérieur est un réseau de tension alternative triphasé.

Selon un mode de réalisation supplémentaire, le circuit électrique extérieur est un réseau de tension alternative monophasé.

Selon un autre mode de réalisation, le circuit électrique extérieur est un réseau de tension continue.

Selon un mode de réalisation additionnel, le circuit électrique extérieur est un autre véhicule.

Selon tous les modes de réalisation mentionnés ci-dessus, les phases électriques du moteur ne sont pas électriquement connectées entre elles, c'est-à-dire qu'aucune phase n'a une borne directement connectée à une borne d'une autre phase. Des exemples de phases électriquement connectées entre elles sont les phases connectées en étoile ou les phases connectées en polygonal, c'est-à-dire en triangle dans le cas triphasé. Cette déconnexion électrique des phases du moteur électrique s'obtient selon les modes de réalisation ci-dessus grâce à l'emploi d'un pont en H propre à chaque phase du moteur.

Selon tous les modes de réalisation mentionnés ci-dessus, lorsque l'on détecte la configuration du circuit électrique extérieur, on peut déterminer si le circuit électrique extérieur est un réseau de tension alternative triphasée, un réseau de tension alternative monophasée, un réseau de tension continue ou un réseau de courant continu et on commande alors le convertisseur et l'onduleur de tension en fonction de cette configuration. Autrement dit, le dispositif est apte à fonctionner avec n'importe lequel des circuits électriques extérieurs mentionnés ci-dessus et non avec l'un seulement de ces circuits électriques extérieurs. Le dispositif électrique de commande peut ainsi être configuré pour être alimenté par l'un quelconque d'un réseau de tension alternative triphasée, d'un réseau de tension alternative monophasée, d'un réseau de tension continue et d'un réseau de courant continu.

En combinaison ou indépendamment de ce qui est exposé au paragraphe précédent, lorsque l'on détermine le transfert de charge, on peut déterminer si ce dernier se produit du circuit électrique extérieur vers les moyens d'accumulation ou des moyens d'accumulation vers le circuit extérieur et on commande alors le convertisseur et l'onduleur de tension en fonction de cette configuration.

Le procédé peut être mis en œuvre avec un seul moteur électrique, c'est-à-dire que l'onduleur de tension n'est connecté qu'à un seul moteur électrique.

Les modes de réalisation de la présente invention concernent également un dispositif selon la revendication indépendante 9 de transfert de charge comportant un dispositif électrique de commande d'un moteur électrique d'un véhicule automobile, ledit dispositif électrique de commande comprenant:
- des moyens d'accumulation,
- un convertisseur de tension connecté aux moyens d'accumulation,
- un onduleur de tension à ponts en H connecté au convertisseur de tension d'une part et aux phases du moteur d'autre part, les bobinages des phases du moteur étant chacun accessible indépendamment l'un de l'autre pour être connecté au circuit électrique extérieur, chacun des bobinages des phases du moteur électrique comprenant un point milieu positionné entre deux demi-bobines du bobinage pour équilibrer le courant entre les deux demi-bobines; le dit dispositif électrique de commande comprenant également des moyens de commande du convertisseur de tension et de l'onduleur de tension en fonction d'un transfert de charge entre les moyens d'accumulation et le circuit électrique extérieur.

Ledit dispositif électrique de commande du dispositif de transfert de charge comporte en outre:
- des moyens de connexion du dispositif avec un circuit électrique extérieur au dit véhicule automobile, la connexion réalisée par lesdits moyens de connexion comprenant une connexion des points milieux des phases à des bornes prédéterminées du circuit électrique extérieur,
- des moyens de détection de la configuration du circuit électrique extérieur,
- des moyens de détermination du transfert de charge, notamment à partir de la détection de la configuration du circuit électrique extérieur.

En outre, les moyens de détection de la configuration d'un circuit électrique extérieur comprennent une ligne pilote et des moyens de gestion de ladite ligne pilote permettant d'échanger avec le circuit électrique extérieur des informations concernant la configuration du dit circuit électrique extérieur, de façon à déterminer si le circuit électrique extérieur est l'un parmi un réseau de tension alternative triphasée, un réseau de tension alternative monophasée, un réseau de tension continue et un réseau de courant continu.

Selon un mode de réalisation supplémentaire, les moyens de connexion du dispositif électrique de commande comprennent une pluralité de connecteurs distincts destinés à être connectés à un type de circuit électrique extérieur spécifique.

Le dispositif peut être tel que mentionné en rapport avec le procédé.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 représente un schéma électrique d'un dispositif de commande d'un moteur électrique triphasé;
- la figure 2 représente un schéma électrique d'un circuit élévateur de tension;
- la figure 3 représente un schéma d'un véhicule automobile comprenant un dispositif de commande d'un moteur électrique triphasé ainsi que les connexions électriques permettant un transfert de charge entre les moyens d'accumulations et un circuit électrique extérieur au véhicule;
- la figure 4 représente un schéma d'unité de contrôle permettant la sélection d'une stratégie de commande de l'onduleur de tension et du convertisseur de tension;
- la figure 5 représente un dispositif de commande d'un moteur électrique et les connexions électriques nécessaires pour se connecter à un réseau alternatif triphasé;
- la figure 6 représente un schéma d'un véhicule automobile comprenant un dispositif de commande d'un moteur électrique triphasé ainsi que les connexions électriques permettant de se connecter à un réseau alternatif triphasé;
- la figure 7 représente un dispositif de commande d'un moteur électrique et les connexions électriques nécessaires pour se connecter à un réseau alternatif monophasé;
- la figure 8 représente un schéma d'un véhicule automobile comprenant un dispositif de commande d'un moteur électrique triphasé ainsi que les connexions électriques permettant de se connecter à un réseau alternatif monophasé;
- la figure 9 représente un schéma d'un mode de réalisation d'un dispositif de commande d'un moteur électrique triphasé d'un véhicule automobile ainsi que les connexions électriques permettant de se connecter à un réseau de tension continue;
- la figure 10 représente un schéma électrique équivalent des connexions électriques du schéma de la figure 9;
- la figure 11 représente un schéma électrique simplifié du schéma de la figure 10;
- la figure 12 représente un schéma d'un dispositif de commande d'un moteur électrique triphasé d'un véhicule automobile ainsi que les connexions électriques permettant de se connecter à un autre véhicule configuré pour recharger sa batterie sur un réseau de tension alternative;
- la figure 13 représente un schéma d'un dispositif de commande d'un moteur électrique triphasé d'un véhicule automobile ainsi que les connexions électriques permettant de se connecter à un autre véhicule configuré pour recharger sa batterie sur un réseau de tension continue.

Sur ces figures, les mêmes numéros de référence désignent des éléments identiques.

Dans la description qui va suivre, de façon générale:
- le terme « transistor bipolaire à grille isolée « insulated gate bipolar transistor (IGBT) » en anglais » correspond à un transistor hybride, regroupant un transistor à effet de champ à grille métal-oxyde (« metal-oxyd semiconductor field effect transistor (MOSFET) » en anglais) en entrée et un transistor bipolaire en sortie;
- le terme « réversible » associé à un convertisseur (par exemple un onduleur ou un convertisseur de tension) définie la capabilité d'un convertisseur de fonctionner dans les deux sens en terme de puissance (les entrées et sorties du convertisseur peuvent aussi être respectivement des sorties et entrées);
- le terme « point milieu » concernant une bobine concerne un point intermédiaire quelconque entre les deux extrémités d'une bobine. Néanmoins, dans le cadre de la présente invention, ce point milieu se trouve préférentiellement au milieu de la bobine de manière à équilibrer les courants entre les deux demi-bobines et réduire ainsi les vibrations lors des cycles de charge.

Les modes de réalisation de la présente invention concernent la gestion des transferts de charge au niveau d'un dispositif électrique de commande d'un moteur électrique destiné à mettre en mouvement un véhicule automobile.

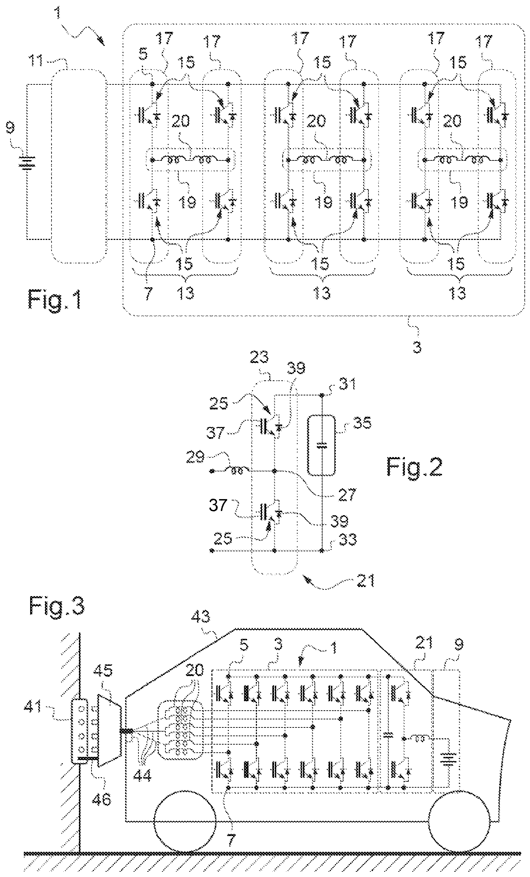

La figure 1 représente un schéma électrique d'un dispositif de commande 1 d'un moteur électrique triphasé selon la présente invention.

Le dispositif de commande 1 comprend un onduleur de tension à pont en H 3 dont les bornes extérieures 5 et 7 sont connectées à des moyens d'accumulation 9, généralement une batterie (ou un ensemble de batteries) rechargeable à haute tension par l'intermédiaire d'un convertisseur de tension 11.

L'onduleur de tension 3 est constitué de trois ponts en H 13. La structure de pont en H 13 correspond à un circuit électrique comportant quatre interrupteurs 15 généralement disposés schématiquement sous forme d'un H, les deux branches verticales du H 17 comprennent, chacune, deux interrupteurs 15 disposés de part et d'autre de la branche horizontale du H 19 qui correspond à la charge du pont. Dans le cas de la présente invention, cette charge correspond au bobinage d'une phase d'un moteur électrique et plus particulièrement à un bobinage à point milieu 20.

Afin de permettre la réversibilité du circuit électrique, les interrupteurs 15 sont généralement réalisés par un transistor monté en parallèle avec une diode, le transistor étant généralement un transistor bipolaire à grille isolée (IGBT).

Par ailleurs, le convertisseur de tension 11 est un convertisseur de tension continue-continue et correspond généralement à un circuit élévateur (« step-up » en anglais) 21 tel que représenté sur la figure 2 mais un circuit abaisseur ou élévateur-abaisseur peut également être utilisé dans le cadre de la présente invention.

Le circuit élévateur 21 de la figure 2 est constitué d'une branche 23 comprenant deux interrupteurs 25 situés de part et d'autre d'un point milieu 27 relié à un élément inductif 29, les bornes extérieures 31 et 33 de la branche étant reliées à un élément capacitif 35. Comme pour l'onduleur de tension 3, afin de permettre la réversibilité du circuit électrique, les interrupteurs 25 du circuit élévateur 21 sont généralement constitués par un transistor de type IGBT 37 monté en parallèle avec une diode 39.

La figure 3 montre un véhicule automobile 43 comprenant un dispositif de commande 1 tel que décrit sur la figure 1. De plus, des moyens de connexion du dispositif électrique de commande 1 comprennent des liaisons électriques 44 entre les points milieux des bobinages 20 et les bornes d'un connecteur électrique 45. Selon un mode de réalisation de la présente invention, une liaison électrique 44 relie un élément de la carrosserie à l'une des bornes du dit connecteur électrique 45 correspondant à la borne de terre.

Lors de la connexion du connecteur électrique 45 au circuit électrique extérieur 41, des moyens de détection permettent au véhicule 43 de déterminer la configuration du circuit électrique extérieur 41 auquel il est connecté. Ces moyens de détection comprennent par exemple l'établissement d'une ligne pilote 46 entre le circuit électrique extérieur 41 et le véhicule 43 qui permet de transmettre des informations, notamment concernant la configuration du circuit électrique extérieur 41, comme par exemple la puissance disponible. La ligne pilote 46 étant, par exemple, une connexion électrique réalisée via le connecteur électrique 45 et selon la norme CEI 61851-1.

Par ailleurs, le véhicule 43 peut comprendre plusieurs connecteurs électriques 45 de différents types. Par exemple, un premier connecteur 45 destiné à être connecté à un réseau de tension monophasé et un deuxième connecteur 45 destiné à être connecté à un réseau de tension triphasé, les connecteurs 45 peuvent être normalisés, par exemple par la norme CEI 61851-1.

Ainsi, en fonction du type de circuit extérieur, le connecteur 45 approprié est utilisé puis en fonction de la configuration du circuit électrique extérieur 41 détectée par la ligne pilote 46, une stratégie de commande de l'onduleur de tension 3 et du convertisseur de tension 11 est appliquée. La stratégie appliquée correspond à une stratégie sélectionnée parmi une pluralité de stratégies prédéfinies.

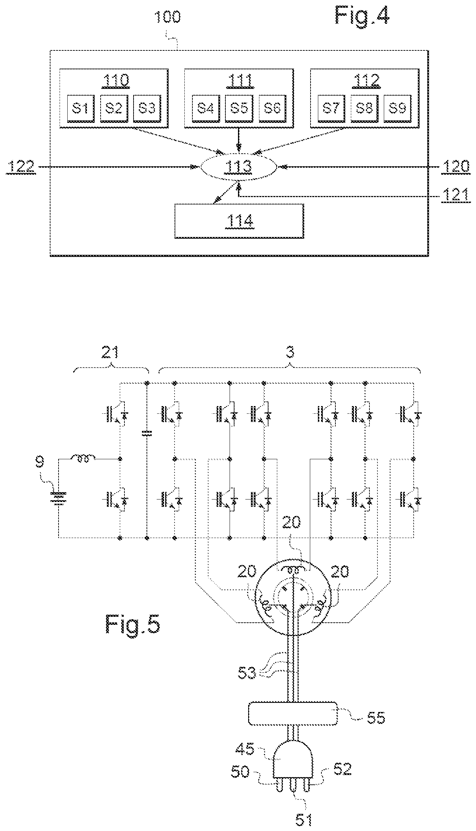

La figure 4 représente un exemple d'unité de contrôle 100 réalisant le traitement des données permettant la sélection d'une stratégie prédéterminée.

Les différentes stratégies de commutation S1...S9 sont sauvegardées dans des modules 110, 111 et 112 comprenant respectivement les stratégies de commutations correspondant à un transfert de charge d'un circuit électrique extérieur vers les moyens d'accumulation, des moyens d'accumulation vers un circuit extérieur et les stratégies de commande du moteur en phase de conduite. Le nombre de stratégies pour chaque module pouvant varier (ici le nombre de 3 stratégies par module est simplement indicatif).

L'unité de contrôle est connectée à des moyens de communication 120, 121 et 122 correspondant respectivement:
- à l'état du véhicule 43, indiquant par exemple si le véhicule 43 est en charge ou en mode conduite,
- à l'état des moyens d'accumulation indiquant le niveau de charge de la batterie 9,
- à la configuration du circuit électrique extérieur 41, ces moyens de communication 122 correspondant par exemple la ligne pilote 46.

A partir des informations reçues, un module de sélection 113 permet de déterminer la stratégie adéquate. Par exemple, à partir de l'état du véhicule ou de la détection d'une connexion du véhicule à un circuit électrique extérieur, le module de sélection détermine si le véhicule est en charge ou non. Si le véhicule est en mode conduite, le module de sélection 113 sélectionne une stratégie dans le module 112 correspondant aux stratégies de conduite. Le choix d'une stratégie peut dépendre, par exemple du mode de conduite choisi (sport, économique, urbain...). Si le véhicule est en mode charge, le module de sélection 113 détermine le sens du transfert de charge en fonction des informations sur la configuration du circuit électrique extérieur et sur l'état de la batterie puis sélectionne la stratégie adéquate dans le module 110 ou 111 en fonction du type de circuit électrique extérieur (source de tension monophasé ou triphasé...).

Le module de sélection 113 transmet ensuite à un module de commande des commutations des interrupteurs 114 la stratégie sélectionnée, par exemple la stratégie S6. Le module de commande 114 pilote alors la commutation, c'est-à-dire l'ouverture et la fermeture, des interrupteurs 15, 25 de l'onduleur de tension 3 et du convertisseur de tension 11 selon la stratégie de commutation sélectionnée.

Dans la suite de la description, les différentes configurations de circuits électriques extérieurs 41 envisagées et les différentes configurations de connexion correspondantes vont être présentées. En pratique, à chaque configuration de connexion correspondant une stratégie de commande de la commutation des interrupteurs 15, 25.

### 1) Le circuit électrique extérieur est un réseau de tension alternative triphasé 48

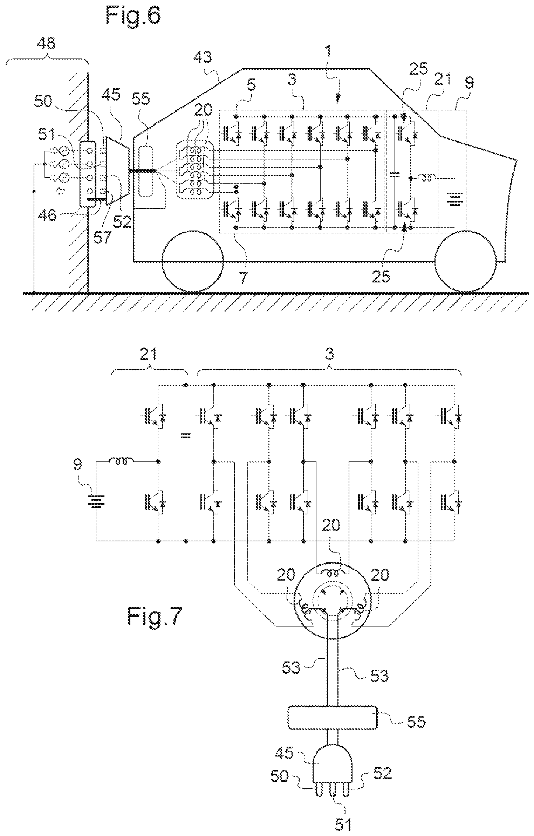

Les figures 5 et 6 représentent les connexions électriques établies dans le cas d'une connexion du véhicule décrit sur la figure 3 à un réseau de tension alternative triphasé. Dans ce cas, le connecteur 45 normalisé correspondant à un réseau de tension alternative triphasé est connecté au réseau 48. Trois bornes prédéterminées 50, 51 et 52 du connecteur électrique 45 sont reliées aux points milieux des bobinages 20 correspondant aux trois phases du moteur. La liaison électrique entre le connecteur 45 et les points milieux des bobinages 20 est réalisée, par exemple, par des câbles 53. De plus, un module 55 de protection vis-à-vis des composants électriques et des personnes, et de filtrage contre les interférences électromagnétiques peut être ajouté au niveau des câbles 53.

Une fois la connexion avec le circuit extérieur 48 effectuée, la ligne pilote 46 permet alors au véhicule 43 de déterminer la configuration du circuit électrique extérieur 48, notamment la puissance disponible sur le réseau. En fonction de la valeur de cette puissance et de l'état de charge des moyens d'accumulation 9 du véhicule 43, une stratégie de commande des interrupteurs de l'onduleur de tension 3 et du convertisseur de tension 11, 21 est sélectionnée et appliquée.

La tension alternative fournie par le réseau 48 est alors convertie en tension continue par l'onduleur de tension 3 et transmise à la batterie 9 par l'intermédiaire du convertisseur de tension 21 qui permet d'ajuster la valeur de la tension à une valeur optimale pour la batterie 9. De plus, en prenant en compte la puissance disponible et l'état de charge des moyens d'accumulation 9 du véhicule 43, la stratégie de commande des interrupteurs 15, 25 permet de réduire le risque de saturation du réseau. En effet, si la batterie 9 est complètement déchargée, la stratégie sélectionnée correspond à une consommation de puissance maximale disponible pour permettre une recharge rapide. Au contraire, si la batterie 9 a déjà un niveau de charge élevée, la stratégie sélectionnée correspond à une consommation de puissance réduite.

D'autre part, une quatrième borne 57 du connecteur 45, correspondant à la borne de terre est reliée à un élément de la carrosserie du véhicule 43 comme représenté sur la figure 6.

Par ailleurs, dans certains cas, il peut être nécessaire de décharger la batterie 9 vers le réseau 48. En effet, en cas de saturation du réseau par exemple, il peut être nécessaire de réduire le transfert de charge vers la batterie 9 voire même de décharger la batterie 9 vers le réseau 48 pour contribuer à éviter une panne du réseau 48. La probabilité d'une telle éventualité peut paraître faible mais devient importante dans le cas d'une généralisation des véhicules électriques 43. En effet, les utilisateurs de véhicules électriques 43 auront tendance à recharger leur véhicule électrique 43 le soir en rentrant chez eux, ce qui entrainera un pic de consommation. Ainsi, en contrôlant la charge et la décharge des batteries 9, le réseau 48 peut être stabilisé et une panne du réseau 48 peut être évitée. La configuration des connexions entre le dispositif de commande 1 et les bornes du connecteur électrique 45 pour décharger la batterie 9 vers le réseau 48 est la même que pour la charge de la batterie 9 puisque comme décrit précédemment le dispositif de commande 1 est réversible. Le seul changement concernera le pilotage des interrupteurs 15, 25 de l'onduleur 3 et du convertisseur de tension 11,21 qui permettra de transférer la charge dans un sens ou dans l'autre.

Par ailleurs, afin d'obtenir une décharge de la batterie 9 vers le réseau 48, une requête de décharge est envoyée par le réseau 48 au véhicule électrique 43 pour demander de décharger la batterie 9. L'envoi de la requête peut, par exemple, être réalisé par le biais de la ligne pilote 46. Le véhicule peut alors accepter ou non la décharge de la batterie 9, cette décision peut être prise, par exemple en fonction du niveau de charge de la batterie 9 ou d'autres paramètres (sélection par l'utilisateur d'un mode sans décharge...)

En réponse à la requête et en cas d'acceptation de décharger la batterie, le véhicule électrique 43 commande les interrupteurs 15, 25 de l'onduleur 3 et du convertisseur de tension 11, 21 de manière à transférer la charge de la batterie 9 vers le réseau 48. De plus, un seuil de charge minimal en-dessous duquel la batterie 9 ne peut plus être déchargée est défini, par exemple, par le propriétaire du véhicule électrique 43 ou par une configuration du constructeur de manière à ce que l'utilisateur du véhicule électrique 43 possède toujours une charge minimale de batterie 9 au moment de la déconnexion du véhicule 43 au réseau 48.

### 2) Le circuit électrique extérieur est un réseau de tension alternative monophasé 54

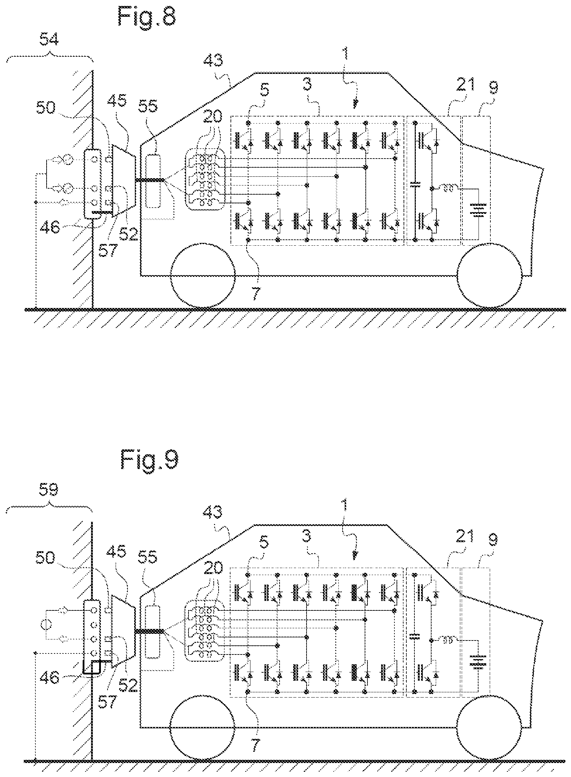

Les figures 7 et 8 représentent les connexions électriques établies par un connecteur électrique 45 dans le cas d'une connexion du véhicule 43 à un réseau de tension alternative monophasé 54. Ces figures correspondent aux figures 5 et 6, le connecteur électrique 45 utilisé étant différent et adapté pour un réseau de tension alternative monophasé 54. Ainsi, seulement deux bornes prédéterminées 50 et 52 du connecteur électrique 45 sont reliées aux points milieux des bobinages 20 correspondant à deux des phases du moteur électrique par des liaisons électriques.

Il est à noter que le choix des deux phases (parmi les trois phases du moteur) n'a pas d'importance. De plus, une troisième borne 57 du connecteur électrique 45, correspondant à la borne de terre, est reliée à un élément de la carrosserie du véhicule 43 comme représenté sur la figure 7.

Le fonctionnement étant par ailleurs identique au mode de réalisation précédent (connexion à un réseau triphasé), la détection de la configuration du circuit électrique extérieur 54 est donc réalisée par une ligne pilote 46 et une stratégie de commutation des interrupteurs 15, 25 est alors déterminée. De plus, un transfert de charge de la batterie 9 vers le réseau 54 peut être réalisé suite à une demande du réseau 54 si cela est nécessaire.

### 3) Le circuit électrique extérieur est un réseau de tension continue 59

La figure 9 représente les connexions électriques établies par un connecteur électrique 45 dans le cas d'une connexion du véhicule 43 décrit précédemment sur les figures 6 et 8 à un réseau de tension continue 59.

Dans ce cas, seulement deux bornes prédéterminées 50 et 52 du connecteur 45 sont reliées aux points milieux des bobinages 20 correspondant à deux des phases du moteur par des connexions électriques comme représenté sur la figure 8. Il est à noter que le choix des deux phases (parmi les trois phases du moteur) n'a pas d'importance.

De plus, une troisième borne 57 du connecteur électrique 45, correspondant à la borne de terre, est reliée à un élément de la carrosserie du véhicule 43. Cette borne de terre est optionnelle si le réseau de tension continue est isolé et est nécessaire si le réseau de tension continue n'est pas isolé.

La source de tension continue 59 est alors branchée sur l'onduleur 3 via deux inductances correspondant aux demi-bobinages 20 des phases du moteur électrique.

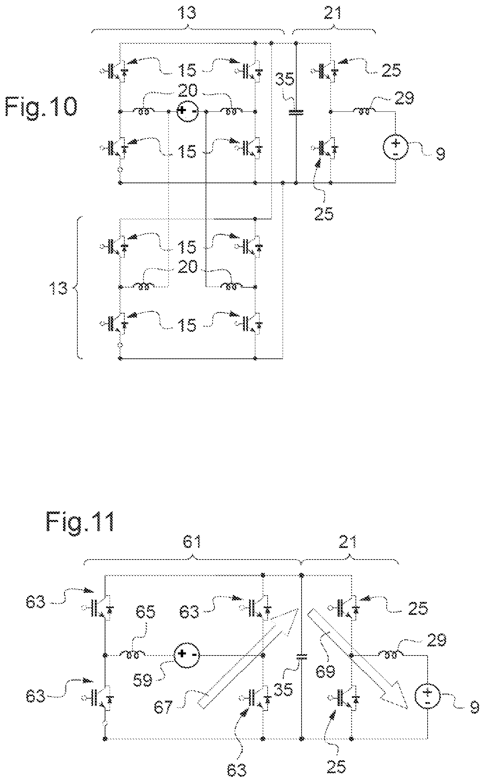

La figure 10 représente le schéma électrique équivalent. Sur cette figure 10, seuls les deux ponts en H 13 de l'onduleur de tension 3 correspondant à deux phases du moteur électrique sont représentés puisque le bobinage de la troisième phase n'est pas connectée et que, par conséquent, le troisième pont en H 13 est inactif. Les deux ponts en H 13 de l'onduleur 3 constitue un système entrelacé avec deux motifs identiques.

Ce système entrelacé peut être simplifié. Le schéma équivalent simplifié est présenté sur la figure 11.

Sur ce schéma, on peut discerner une première portion 61, comprenant 4 interrupteurs 63 et un élément inductif 65, équivalente à un élévateur de tension, modélisé par une flèche montante 67 et une deuxième portion (correspondant au circuit élévateur 21) agissant comme un abaisseur de tension modélisé par une flèche descendante 69. Ainsi, lors d'une connexion au réseau de tension continue 59, la tension fournie est d'abord élevée par la première portion 61 correspondant à un élévateur puis est abaissée via la deuxième portion 21 correspondant à un abaisseur.

La commande du circuit élévateur 21 permet de contrôler le courant absorbé dans la batterie 9 comme pour la charge sur un réseau alternatif.

Par ailleurs, de la même manière que dans les modes de réalisation précédents, l'établissement d'une ligne pilote 46 permet la détection de la configuration du circuit électrique extérieur 59 et la détermination d'une stratégie de pilotage des interrupteurs 15, 25 de l'onduleur de tension et du convertisseur de tension 11, 21. De plus, le circuit présenté sur la figure 11 est également réversible de sorte qu'un transfert de la batterie 9 vers le réseau 59 peut également être réalisé.

### 4) Le circuit électrique extérieur est un deuxième véhicule 75, par exemple, nécessitant une recharge de batterie en tension alternative

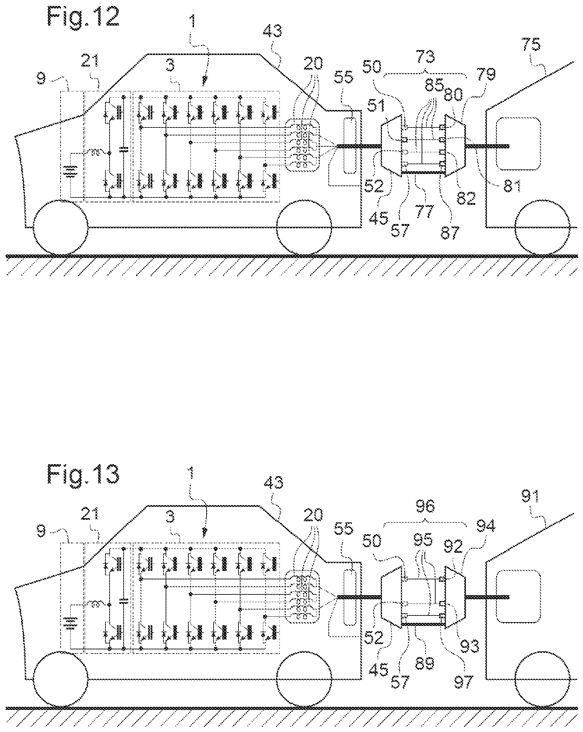

La figure 12 représente les connexions électriques établies par le connecteur électrique 45 dans le cas d'une connexion à un deuxième véhicule 75 nécessitant une recharge de batterie en tension alternative.

Le connecteur électrique 45 peut également être utilisé pour établir une liaison électrique 73 avec un deuxième véhicule 75 afin de permettre de recharger la batterie du deuxième véhicule 75, par exemple en cas de panne due à une batterie faible. Dans le cas où le deuxième véhicule 75 est un véhicule devant se recharger sur une source de tension alternative triphasé les connexions électriques sont établies comme décrit sur la figure 12.

Une ligne pilote 77 est établie entre le premier 43 et le deuxième 75 véhicule de manière à détecter la configuration du deuxième véhicule 75. Le protocole de cette ligne pilote 77 peut correspondre au protocole de la ligne pilote 46 décrite précédemment dans le cas d'une connexion à un réseau électrique.

Les connexions électriques sont établies de sorte que trois bornes prédéfinies 50, 51 et 52 du connecteur électrique 45 sont connectées aux points milieux des bobinages 20 correspondant aux phases du moteur électrique du premier véhicule 43 comme pour la recharge sur une source de tension alternative triphasé et lesdites trois bornes prédéfinies 50, 51 et 52 sont connectées à trois bornes prédéfinies 80, 81 et 82 correspondantes du connecteur électrique 79 du deuxième véhicule 75, par exemple, par l'intermédiaire de câbles électriques 85. Un quatrième câble 85 permet de relier les quatrièmes bornes prédéfinies 57 et 87 correspondant aux bornes de terre (reliées à un élément de la carrosserie) des deux véhicules 43, 75. En pratique, l'ensemble des câbles 85 correspondant aux divers connexions et à la ligne pilote 77 peut être rassemblé dans un cordon de raccordement.

Lorsque les différentes connexions sont établies entre les deux véhicules, la batterie 9 du premier véhicule 43 peut alors se décharger pour recharger la batterie (non représentée) du deuxième véhicule 75. De plus, la ligne pilote 77 permet de déterminer les caractéristiques (tension...) de la charge à transférer au deuxième véhicule 75 et de piloter les interrupteurs 15, 25 de l'onduleur 3 et du circuit élévateur 21 en conséquence.

Dans le cas où le deuxième véhicule 75 est un véhicule devant se recharger sur une source de tension alternative monophasé, le transfert de charge d'un premier véhicule vers un deuxième véhicule est réalisé de la même manière, la seule différence étant l'établissement de connexions avec les points milieux de seulement deux des phases du moteur (comme dans le cas de la recharge sur un réseau monophasé).

### 5) Le circuit électrique extérieur est un deuxième véhicule 91 par exemple nécessitant une recharge de batterie en tension continue

C'est le cas par exemple si la prise de charge du deuxième véhicule 91 est connectée directement sur la batterie 9.

La figure 13 représente les connexions électriques établies par le connecteur électrique 45 dans le cas d'une connexion à un deuxième véhicule 91 nécessitant une recharge de batterie en tension continue.

Une ligne pilote 89 est établie entre le premier 43 et le deuxième 91 véhicule afin de détecter la configuration du deuxième véhicule 91. Une liaison électrique 96 est établie, comme représenté sur la figure 14. Deux bornes prédéfinies 50 et 52 du connecteur électrique 45 sont connectées aux points milieux de deux des bobinages 20 correspondant aux phases du moteur électrique du premier véhicule 43 comme pour la recharge sur une source de tension continue. Lesdites deux bornes prédéfinies 50 et 52 sont en outre connectées à deux bornes prédéfinies 92 et 93 correspondantes du connecteur électrique 94 du deuxième véhicule 91, par exemple, par l'intermédiaire de câbles électriques 95. Un troisième câble électrique 95 permet de relier les troisièmes bornes prédéfinies 57 et 97 correspondant aux bornes de terre (reliées à un élément de la carrosserie) des deux véhicules.

Lorsque les différentes connexions sont établies entre les deux véhicules, la batterie 9 du premier véhicule 43 peut alors se décharger pour recharger la batterie (non représentée) du deuxième véhicule 91. De plus, la ligne pilote 89 permet de déterminer les caractéristiques (tension...) de la charge à transférer au deuxième véhicule 91 et de déterminer ainsi la stratégie de commande des interrupteurs 15, 25 de l'onduleur et du convertisseur de tension 11, 21.

En fonction du type de circuit électrique extérieur (monophasé, triphasé, continu..), on aura donc un connecteur électrique adapté (un connecteur électrique pouvant éventuellement servir pour plusieurs types de circuits électriques extérieurs) permettant d'établir les connexions électriques adéquates puis en fonction, notamment, de la configuration du circuit électrique extérieur détectée, on appliquera une stratégie prédéterminée de commande de la commutation des interrupteurs 15, 25 de l'onduleur de tension 3 et du convertisseur de tension 11, 21.

Ainsi, l'utilisation d'un dispositif électrique de commande d'un moteur électrique comprenant un onduleur à pont en H 3, l'établissement de liaisons électriques entre le dispositif électrique de commande et un circuit électrique extérieur et l'application d'une stratégie de commande de l'onduleur de tension 3 et du convertisseur de tension 11, 21 en fonction du type et de la configuration d'un circuit électrique extérieur auquel est connecté le dispositif électrique de commande permet d'obtenir un dispositif de charge adapté pour un grande nombre de type de réseau sans avoir à ajouter de nombreux composants électriques d'adaptation pour les différentes configurations de circuits électriques extérieurs.

De plus, la réversibilité du dispositif électrique de commande permet une décharge de la batterie vers les circuits électriques extérieurs ce qui permet d'une part le dépannage d'un autre véhicule nécessitant de recharger sa batterie et d'autre part de permettre la stabilisation d'un réseau (par exemple en cas de saturation). Par ailleurs, le faible nombre de composants utilisés pour l'ensemble des mode de réalisation de l'invention permet de réduire le coût d'un dispositif de transfert de charge « quasi-universel » et de réduire le poids total du dispositif électrique permettant la commande du moteur et la recharge des moyens d'accumulation.

Il est également à noter que les modes de réalisation de la présente invention ne se limitent à un moteur triphasé mais à tout moteur ayant un nombre de phases supérieur à 3 (voire 2 si on se limite à un circuit électrique extérieur monophasé), le circuit électrique extérieur pouvant alors avoir un nombre de phases inférieur ou égal au nombre de phases du moteur.

## Revendications

1. Procédé de gestion d'un transfert de charge entre, d'une part des moyens d'accumulation (9) d'un dispositif électrique de commande (1) d'un moteur électrique d'un véhicule automobile (43) et, d'autre part, un circuit électrique extérieur (41) au dit véhicule automobile (43), le dit dispositif électrique de commande (1) comprenant:
- un convertisseur de tension (11, 21) connecté aux moyens d'accumulation (9),
- un onduleur de tension à ponts en H (3) connecté au convertisseur de tension (11, 21) d'une part et aux phases du moteur électrique d'autre part, les bobinages des phases dudit moteur étant chacun accessible indépendamment l'un de l'autre pour être connecté au circuit électrique extérieur (41), chacun des bobinages des phases du moteur électrique comprenant un point milieu positionné entre deux demi-bobines du bobinage pour équilibrer le courant entre les deux demi-bobines ;
le procédé comprenant une étape de commande du convertisseur de tension (11, 21) et de l'onduleur de tension (3) en fonction du transfert de charge ;
le procédé comprenant en outre, avant la commande du convertisseur (11, 21) et de l'onduleur de tension (3) :
- la connexion du dispositif électrique de commande (1) au circuit électrique extérieur (41) au véhicule (43), dans laquelle les points milieux des bobinages des phases sont connectés à des bornes prédéterminées du circuit électrique extérieur (41),
- la détection de la configuration du circuit électrique extérieur (41), comprenant l'établissement d'une ligne pilote (46, 77, 89) permettant au véhicule (43) d'échanger avec le circuit électrique extérieur (41) des informations concernant la configuration dudit circuit électrique extérieur (41), de façon à déterminer si le circuit électrique extérieur (41) est l'un parmi un réseau de tension alternative triphasée, un réseau de tension alternative monophasée, un réseau de tension continue et un réseau de courant continu ;
- la détermination du transfert de charge à partir de la détection de la configuration du circuit électrique extérieur (41) auquel le dispositif électrique de commande (1) est connecté.

2. Procédé selon la revendication 1, dans lequel le dispositif électrique de commande est configuré pour être alimenté par l'un quelconque d'un réseau de tension alternative triphasée, d'un réseau de tension alternative monophasée, d'un réseau de tension continue et d'un réseau de courant continu.

3. Procédé selon l'une quelconque des revendications 1 à 2, dans lequel, lorsque l'on détermine le transfert de charge, on détermine si de dernier se produit du circuit électrique extérieur (41) au véhicule (43) vers les moyens d'accumulation (9) ou des moyens d'accumulation (9) vers le circuit extérieur (41) au véhicule (43) et dans lequel on commande alors le convertisseur (11, 21) et l'onduleur de tension (3) en fonction de cette détermination.

4. Procédé de gestion selon l'une quelconque des revendications 1 à 3, dans lequel les phases du moteur électrique comprennent un bobinage à point milieu (20) et dans lequel la connexion du dispositif (1) au circuit électrique extérieur (41) au véhicule (43) comprend la connexion de points milieux des phases à des bornes prédéterminées du circuit électrique extérieur (41).

5. Procédé de gestion selon l'une des revendications précédentes, dans lequel le convertisseur de tension (11, 21) et l'onduleur de tension (3) comprennent des interrupteurs (15, 25), et dans lequel la commande du convertisseur de tension (11, 21) et de l'onduleur de tension (3) comprend l'ouverture et la fermeture des interrupteurs desdits convertisseur de tension (11, 21) et onduleur de tension (3).

6. Procédé de gestion selon l'une des revendications précédentes dans lequel la borne de terre du circuit électrique extérieur (41) est reliée à un élément de la carrosserie du véhicule automobile (43).

7. Procédé de gestion selon l'une des revendications 1 à 6 dans lequel le circuit électrique extérieur (41) est un autre véhicule.

8. Procédé selon l'une quelconque des revendications précédentes, étant mis en œuvre avec un seul moteur électrique.

9. Dispositif de transfert de charge comportant un dispositif électrique de commande (1) d'un moteur électrique d'un véhicule automobile (43), ledit dispositif électrique de commande (1) comprenant:
- des moyens d'accumulation (9),
- un convertisseur de tension (11, 21) connecté aux moyens d'accumulation (9),
- un onduleur de tension à ponts en H (3) connecté au convertisseur de tension (11, 21) d'une part et aux phases du moteur d'autre part, les bobinages des phases du moteur étant chacun accessible indépendamment l'un de l'autre pour être connecté au circuit électrique extérieur (41), chacun des bobinages des phases du moteur électrique comprenant un point milieu positionné entre deux demi-bobines du bobinage pour équilibrer le courant entre les deux demi-bobines ;
ledit dispositif électrique de commande (1) comprenant également des moyens de commande du convertisseur de tension (11, 21) et de l'onduleur de tension (3) en fonction d'un transfert de charge entre les moyens d'accumulation (9) et le circuit électrique extérieur (41) ;
ledit dispositif électrique de commande (1) comprenant en outre :
- des moyens de connexion du dispositif (1) avec un circuit électrique extérieur (41) au dit véhicule automobile (43), la connexion réalisée par lesdits moyens de connexion comprenant une connexion des points milieux des phases à des bornes prédéterminées du circuit électrique extérieur (41),
- des moyens de détection de la configuration du circuit électrique extérieur (41) comprenant une ligne pilote (46, 77, 89) permettant d'échanger avec le circuit électrique extérieur (41) des informations concernant la configuration dudit circuit électrique extérieur (41), de façon à déterminer si le circuit électrique extérieur (41) est l'un parmi un réseau de tension alternative triphasée, un réseau de tension alternative monophasée, un réseau de tension continue et un réseau de courant continu ;
- des moyens de détermination du transfert de charge à partir de la détection de la configuration du circuit électrique extérieur (41).

10. Dispositif selon la revendication 9, les moyens de détermination du transfert de charge étant configurés pour déterminer si ce dernier se produit du circuit électrique extérieur (41) au véhicule (43) vers les moyens d'accumulation (9) ou des moyens d'accumulation (9) vers le circuit extérieur (41) au véhicule (43) et les moyens de commande du convertisseur de tension (11, 22) et de l'onduleur de tension (23) étant configurés pour commander ce convertisseur (11, 21) et cet onduleur de tension (3) en fonction de cette détermination.

11. Dispositif de transfert de charge selon l'une quelconque des revendication 9 ou 10 dans lequel les moyens de connexion du dispositif (1) comprennent une pluralité de connecteurs (45) distincts destinés à être connectés à un type de circuit électrique extérieur (41) spécifique.

## Patentansprüche

1. Verfahren zur Verwaltung einer Ladungsübertragung zwischen einerseits Speichereinrichtungen (9) einer elektrischen Steuervorrichtung (1) eines Elektromotors eines Kraftfahrzeugs (43) und andererseits einem Stromkreis (41) außerhalb des Kraftfahrzeugs (43), wobei die elektrische Steuervorrichtung (1) enthält:
- einen mit den Speichereinrichtungen (9) verbundenen Spannungswandler (11, 21),
- einen Spannungswechselrichter mit H-Brücken (3), der einerseits mit dem Spannungswandler (11, 21) und andererseits mit den Phasen des Elektromotors verbunden ist, wobei die Wicklungen der Phasen des Motors je unabhängig voneinander zugänglich sind, um mit dem äußeren Stromkreis (41) verbunden zu werden, wobei jede der Wicklungen der Phasen des Elektromotors einen Mittelpunkt enthält, der zwischen zwei Halbspulen der Wicklung positioniert ist, um den Strom zwischen den zwei Halbspulen auszugleichen;
wobei das Verfahren einen Schritt der Steuerung des Spannungswandlers (11, 21) und des Spannungswechselrichters (3) abhängig von der Ladungsübertragung enthält;
wobei das Verfahren außerdem vor der Steuerung des Wandlers (11, 21) und des Spannungswechselrichters (3) enthält:
- die Verbindung der elektrischen Steuervorrichtung (1) mit dem Stromkreis (41) außerhalb des Fahrzeugs (43), wobei die Mittelpunkte der Wicklungen der Phasen mit vorbestimmten Anschlüssen des äußeren Stromkreises (41) verbunden sind,
- die Erfassung der Konfiguration des äußeren Stromkreises (41), die den Aufbau einer Pilotleitung (46, 77, 89) enthält, die es dem Fahrzeug (43) ermöglicht, mit dem äußeren Stromkreis (41) Informationen betreffend die Konfiguration des äußeren Stromkreises (41) auszutauschen, um zu bestimmen, ob der äußere Stromkreis (41) einer von einem Dreiphasenwechselspannungsnetz, einem Einphasenwechselspannungsnetz, einem Gleichspannungsnetz und einem Gleichstromnetz ist;
- die Bestimmung der Ladungsübertragung ausgehend von der Erfassung der Konfiguration des äußeren Stromkreises (41), mit dem die elektrische Steuervorrichtung (1) verbunden ist.

2. Verfahren nach Anspruch 1, wobei die elektrische Steuervorrichtung konfiguriert ist, von einem beliebigen eines Dreiphasenwechselspannungsnetzes, eines Einphasenwechselspannungsnetzes, eines Gleichspannungsnetzes und eines Gleichstromnetzes versorgt zu werden.

3. Verfahren nach einem der Ansprüche 1 bis 2, wobei, wenn die Ladungsübertragung bestimmt wird, bestimmt wird, ob letztere vom Stromkreis (41) außerhalb des Fahrzeugs (43) zu den Speichereinrichtungen (9) oder von den Speichereinrichtungen (9) zum Stromkreis (41) außerhalb des Fahrzeugs (43) stattfindet, und wobei dann der Wandler (11, 21) und der Spannungswechselrichter (3) abhängig von dieser Bestimmung gesteuert werden.

4. Verwaltungsverfahren nach einem der Ansprüche 1 bis 3, wobei die Phasen des Elektromotors eine Wicklung mit Mittelpunkt (20) enthalten, und wobei die Verbindung der Vorrichtung (1) mit dem Stromkreis (41) außerhalb des Fahrzeugs (43) die Verbindung der Mittelpunkte der Phasen mit vorbestimmten Anschlüssen des äußeren Stromkreises (41) enthält.

5. Verwaltungsverfahren nach einem der vorhergehenden Ansprüche, wobei der Spannungswandler (11, 21) und der Spannungswechselrichter (3) Schalter (15, 25) enthalten, und wobei die Steuerung des Spannungswandlers (11, 21) und des Spannungswechselrichters (3) das Öffnen und Schließen der Schalter der Spannungswandler (11, 21) und Spannungswechselrichter (3) enthält.

6. Verwaltungsverfahren nach einem der vorhergehenden Ansprüche, wobei der Erdungsanschluss des äußeren Stromkreises (41) mit einem Element der Karosserie des Kraftfahrzeugs (43) verbunden ist.

7. Verwaltungsverfahren nach einem der Ansprüche 1 bis 6, wobei der äußere Stromkreis (41) ein anderes Fahrzeug ist.

8. Verfahren nach einem der vorhergehenden Ansprüche, das mit einem einzigen Elektromotor durchgeführt wird.

9. Ladungsübertragungsvorrichtung, die eine elektrische Steuervorrichtung (1) eines Elektromotors eines Kraftfahrzeugs (43) enthält, wobei die elektrische Steuervorrichtung (1) enthält:
- Speichereinrichtungen (9),
- einen mit den Speichereinrichtungen (9) verbundenen Spannungswandler (11, 21),
- einen Spannungswechselrichter mit H-Brücken (3), der mit dem Spannungswandler (11, 21) einerseits und mit den Phasen des Motors andererseits verbunden ist, wobei die Wicklungen der Phasen des Motors je unabhängig voneinander zugänglich sind, um mit dem äußeren Stromkreis (41) verbunden zu werden, wobei jede der Wicklungen der Phasen des Elektromotors einen Mittelpunkt enthält, der zwischen zwei Halbspulen der Wicklung positioniert ist, um den Strom zwischen den zwei Halbspulen auszugleichen;
wobei die elektrische Steuervorrichtung (1) ebenfalls Einrichtungen zur Steuerung des Spannungswandlers (11, 21) und des Spannungswechselrichters (3) abhängig von einer Ladungsübertragung zwischen den Speichereinrichtungen (9) und dem äußeren Stromkreis (41) enthält;
wobei die elektrische Steuervorrichtung (1) außerdem enthält:
- Verbindungseinrichtungen der Vorrichtung (1) mit einem Stromkreis (41) außerhalb des Kraftfahrzeugs (43), wobei die von den Verbindungseinrichtungen hergestellte Verbindung eine Verbindung der Mittelpunkte der Phasen mit vorbestimmten Anschlüssen des äußeren Stromkreises (41) enthält,
- Einrichtungen zur Erfassung der Konfiguration des äußeren Stromkreises (41), die eine Pilotleitung (46, 77, 89) enthalten, die es ermöglicht, mit dem äußeren Stromkreis (41) Informationen betreffend die Konfiguration des äußeren Stromkreises (41) auszutauschen, um zu bestimmen, ob der äußere Stromkreis (41) einer von einem Dreiphasenwechselspannungsnetz, einem Einphasenwechselspannungsnetz, einem Gleichspannungsnetz und einem Gleichstromnetz ist;
- Einrichtungen zur Bestimmung der Ladungsübertragung ausgehend von der Erfassung der Konfiguration des äußeren Stromkreises (41).

10. Vorrichtung nach Anspruch 9, wobei die Einrichtungen zur Bestimmung der Ladungsübertragung konfiguriert sind, zu bestimmen, ob letztere vom Stromkreis (41) außerhalb des Fahrzeugs (43) zu den Speichereinrichtungen (9) oder von den Speichereinrichtungen (9) zum Stromkreis (41) außerhalb des Fahrzeugs (43) erfolgt, und die Steuereinrichtungen des Spannungswandlers (11, 22) und des Spannungswechselrichters (23) konfiguriert sind, diesen Wandler (11, 21) und diesen Spannungswechselrichter (3) abhängig von dieser Bestimmung zu steuern.

11. Ladungsübertragungsvorrichtung nach einem der Ansprüche 9 oder 10, wobei die Verbindungseinrichtungen der Vorrichtung (1) eine Vielzahl unterschiedlicher Verbinder (45) enthalten, die dazu bestimmt sind, mit einem speziellen Typ von äußerem Stromkreis (41) verbunden zu werden.

## Claims

1. Method for managing a charge transfer between, on the one hand, accumulation means (9) of an electrical control device (1) for controlling an electric motor of a motor vehicle (43) and, on the other hand, an external electrical circuit (41) outside said motor vehicle (43), said electrical control device (1) comprising:
- a voltage converter (11, 21) connected to the accumulation means (9),
- an H-bridge voltage inverter (3) connected to the voltage converter (11, 21), on the one hand, and to the phases of the electric motor, on the other hand, the windings of the phases of said motor each being accessible independently of one another in order to be connected to the external electrical circuit (41), each of the windings of the phases of the electric motor comprising a centre tap positioned between two half-coils of the winding in order to balance the current between the two half-coils;
the method comprising a step of controlling the voltage converter (11, 21) and the voltage inverter (3) as a function of the charge transfer;
the method furthermore comprising, before controlling the converter (11, 21) and the voltage inverter (3):
- connecting the electrical control device (1) to the external electrical circuit (41) outside the vehicle (43), wherein the centre taps of the windings of the phases are connected to predetermined terminals of the external electrical circuit (41),
- detecting the configuration of the external electrical circuit (41), comprising establishing a pilot line (46, 77, 89) allowing the vehicle (43) to exchange, with the external electrical circuit (41), information concerning the configuration of said external electrical circuit (41), so as to determine whether the external electrical circuit (41) is one of a three-phase AC voltage network, a single-phase AC voltage network, a DC voltage network and a DC current network;
- determining the charge transfer on the basis the detection of the configuration of the external electrical circuit (41) to which the electrical control device (1) is connected.

2. Method according to Claim 1, wherein the electrical control device is configured so as to be supplied by any one of a three-phase AC voltage network, a single-phase AC voltage network, a DC voltage network and a DC current network.

3. Method according to either one of Claims 1 and 2, wherein, when the charge transfer is determined, it is determined whether this takes place from the external electrical circuit (41) outside the vehicle (43) to the accumulation means (9) or from the accumulation means (9) to the external circuit (41) outside the vehicle (43), and wherein the converter (11, 21) and the voltage inverter (3) are then controlled as a function of this determination.

4. Management method according to any one of Claims 1 to 3, wherein the phases of the electric motor comprise a centre tap winding (20) and wherein connecting the device (1) to the external electrical circuit (41) outside the vehicle (43) comprises connecting centre taps of the phases to predetermined terminals of the external electrical circuit (41).

5. Management method according to one of the preceding claims, wherein the voltage converter (11, 21) and the voltage inverter (3) comprise switches (15, 25), and wherein controlling the voltage converter (11, 21) and the voltage inverter (3) comprises opening and closing the switches of said voltage converter (11, 21) and voltage inverter (3).

6. Management method according to one of the preceding claims, wherein the earth terminal of the external electrical circuit (41) is connected to an element of the body of the motor vehicle (43).

7. Management method according to one of Claims 1 to 6, wherein the external electrical circuit (41) is another vehicle.

8. Method according to any one of the preceding claims, being implemented with a single electric motor.

9. Charge transfer device comprising an electrical control device (1) for controlling an electric motor of a motor vehicle (43), said electrical control device (1) comprising:
- accumulation means (9),
- a voltage converter (11, 21) connected to the accumulation means (9),
- an H-bridge voltage inverter (3) connected to the voltage converter (11, 21), on the one hand, and to the phases of the motor, on the other hand, the windings of the phases of the motor each being accessible independently of one another in order to be connected to the external electrical circuit (41), each of the windings of the phases of the electric motor comprising a centre tap positioned between two half-coils of the winding in order to balance the current between the two half-coils;
said electrical control device (1) also comprising control means for controlling the voltage converter (11, 21) and the voltage inverter (3) as a function of a charge transfer between the accumulation means (9) and the external electrical circuit (41);
said electrical control device (1) furthermore comprising:
- means for connecting the device (1) to an external electrical circuit (41) outside said motor vehicle (43), the connection formed by said connection means comprising a connection of the centre taps of the phases to predetermined terminals of the external electrical circuit (41),
- means for detecting the configuration of the external electrical circuit (41), comprising a pilot line (46, 77, 89) for exchanging, with the external electrical circuit (41), information concerning the configuration of said external electrical circuit (41), so as to determine whether the external electrical circuit (41) is one of a three-phase AC voltage network, a single-phase AC voltage network, a DC voltage network and a DC current network;
- means for determining the charge transfer on the basis of the detection of the configuration of the external electrical circuit (41).

10. Device according to Claim 9, the means for determining the charge transfer being configured so as to determine whether this takes place from the external electrical circuit (41) outside the vehicle (43) to the accumulation means (9) or from the accumulation means (9) to the external circuit (41) outside the vehicle (43) and the control means for controlling the voltage converter (11, 22) and the voltage inverter (23) being configured so as to control this converter (11, 21) and this voltage inverter (3) as a function of this determination.

11. Charge transfer device according to either one of Claims 9 and 10, wherein the means for connecting the device (1) comprise a plurality of distinct connectors (45) intended to be connected to a specific type of external electrical circuit (41).
